# EUROPÄISCHE PATENTANMELDUNG

(11) **EP 2 330 032 A1**
(43) Veröffentlichungstag der Anmeldung: **08.06.2011**
(21) Anmeldenummer: 09810293.2
(22) Anmeldetag: 24.08.2009
(51) Int. Cl.: B64C 21/04, B64C 39/00, B63H 11/02

(54) **VERFAHREN ZUR ERZEUGUNG EINES ANTRIEBS (AUSFÜHRUNGSARTEN) UND VORRICHTUNG ZUR FORTBEWEGUNG IN EINEM FLÜSSIGKEITSMEDIUM (AUSFÜHRUNGSARTEN)**

(30) Priorität: 25.08.2008 RU 2008134763
(71) Anmelder: Kovalchuk, Valeriy Adamovich, Chelyabinsk 454087 (RU); Kovalchuk, Sergei Adamovich, Chelyabinsk, 454008 (RU); BODROV, Roman Petrovich, Chelyabinsk 454025 (RU); "KB BRIZ" Joint-Stock Company, Chelyabinsk 454091 (RU)
(72) Erfinder: KOVALCHUK, Valeriy Adamovich, Chelyabinsk 454087 (RU)
(74) Vertreter: Jeck, Anton
(86) Internationale Anmeldenummer: PCT/RU2009/000426
(87) Internationale Veröffentlichungsnummer: WO 2010/024726

(57) **Zusammenfassung**

Die Gruppe von Erfindungen bezieht sich auf Verfahren und Geräte zur Bewegung im Luft- und Wassermedium. Die Verfahren und die Geräte zur Bewegung im flüssigen Medium enthalten einen Flügel mit einem aerodynamischen Querschnitt mit einer gewölbten oberen Flügelfläche und eine Hochdruckquelle des flüssigen Mediums. Die Hochdruckquelle des flüssigen Mediums ist mit einer Vorrichtung zur Bildung von Druckstrahlen über der oberen gewölbten Flügelfläche verbunden. Die sechs Ausführungsformen der Ausgestaltung des Geräts sind durch den Aufbau der Vorrichtung zur Bildung der Druckstrahlen **gekennzeichnet**. Das Verfahren zur Vortriebserzeugung besteht in der Anwendung der Vorrichtung zur Bildung der Druckstrahlen über der oberen gewölbten Flügelfläche. Die fünf Ausführungsformen des Verfahrens sind durch den Aufbau der Vorrichtung zur Bildung von Druckstrahlen **gekennzeichnet**. Die Gruppe der Erfindungen erhöht den Wirkungsgrad.

## Beschreibung

Die Erfindung betrifft ein Verfahren zur Vortriebserzeugung in einem flüssigen Medium nach dem Oberbegriff des Anspruchs 1 und ein Gerät zur Erzeugung einer Bewegung in einem flüssigen Medium.

Die Erfindung bezieht sich auf Transportmittel und zwar auf ein Verfahren zur Vortriebserzeugung und auf Geräte mit einem Flügel mit einem aerodynamischen Querschnitt. Die Erfindung kann in Geräten zur Erzeugung einer Bewegung in einem flüssigen Medium angewendet werden, und zwar in Luft und in Wasser.

Zurzeit werden folgende Arten von Vortriebsmitteln zur Vortriebserzeugung in gasförmigen (Luft) und flüssigen (Wasser) Medien eingesetzt:
- Behälter, deren durchschnittliche Dichte kleiner als die Umgebungsdichte ist: Luftschiffe, Luftballons, Behälter der U-Boote usw. Solche Vortriebsmittel können nur einen Hubschub erzeugen (Archimedessches Gesetz);
- Strahltriebwerk: Diesem liegt der Ausstoß von gespeicherten Arbeitskörpern zugrunde oder die Aufnahme, die Beschleunigung und der nachfolgende Ausstoß eines Umgebungsmaterials (Newtonsches Axiom);
- Gebläse (Schraubenpropeller): Die Grundlage dafür ist die Zusammenwirkung einer schiefen Ebene mit dem Medium unter ihrer relativen Bewegung;
- Flugzeugtragflügel (Hubschrauber-Rotoren): Diesen liegt der Mediumdruckabbau-Effekt unter Erhöhung der Bewegungsgeschwindigkeit des Mediums zugrunde. Das ist durch die Flügelgeometrie bedingt. Um den Druckabbau über dem Flügel eines Flugzeugs oder eines Hubschraubers sicherzustellen, müssen diese in Bezug auf die Luft in Bewegung gebracht werden (Die Hubkraft kann auch bei Wind entstehen, jedoch handelt es sich dabei um keinen steuerbaren Flugzustand).

Als der nächstkommende Stand der Technik (Prototyp) wurde ein Verfahren zur Vortriebserzeugung und ein VTOL-Flugzeug ("fliegende Scheibe") nach dem Patent RU 2151717 vom 02.03.1998, veröffentlicht 27.06.2000 gewählt. Dieses Verfahren zur Vortriebserzeugung ist durch die Richtung von Flüssigmedium-Druckstrahlen (Luftstrom) über einer (tangential) oberen gewölbten Flügelfläche (Scheibe) mit aerodynamischem Querschnitt für eine starke Anblasung der Scheibenoberfläche gekennzeichnet.

In dieser Erfindung wird ein Verfahren zur Vortriebserzeugung nach dem Coanda-Effekt verwendet. Dieser ist durch Folgendes gekennzeichnet: Es wird ein gleichmäßiger Luftstrom tangential zu einem Flügel mit einem aerodynamischen Querschnitt (Scheibe mit sphärischer Oberfläche) erzeugt. Dieser Luftstrom bläst die Flügeloberfläche an. Gemäß der Bernoullischen Gleichung werden über dem Flugzeug ein luftverdünnter Raum und ein Hubschub aufwärts erzeugt. Dabei ist über der oberen Flügelfläche ein Hochdruckgebläse aufgebaut. Dieses besteht aus zwei gegenseitig gespiegelt angeordneten Fliehkraftschrauben, die sich gegenläufig koaxial drehen. Außerdem ist ein Gebläse mit einem Diffusor in Form einer ringförmigen Klappe mit Spiralenkanal versehen, um den Schubvektor zu verändern und das Anlassen während der Fortbewegung der "fliegenden Scheibe" zu erzielen. Dank dem Ansaugeffekt ist eine Massenzunahme geringfügig. Deswegen weisen das Verfahren und das Flugzeug einen niedrigen Wirkungsgrad bei der Vortriebserzeugung auf.

Es ist Aufgabe der Erfindung, den Wirkungsgrad bei der Vortriebserzeugung zu steigern.

Die gestellte Aufgabe wird durch eine Gruppe von Erfindungen gelöst, die einen gemeinsamen einheitlichen Erfindungsgedanken haben.

Diese Gruppe umfasst Folgendes:
- ein erstes Verfahren zur Vortriebserzeugung. Gemäß diesem Verfahren werden Flüssigmedium-Druckstrahlen aus Düsen tangential zur oberen gewölbten Flügelfläche mit einem aerodynamischen Querschnitt gerichtet. In diesem Verfahren werden Düsen gemäß der Erfindung schräg zur Flüssigmedium-druckstrahlenrichtung verlagert. Die Flüssigmediumstrahlen (die Strahlen des flüssigen Mediums) ziehen mittels ihrer Wirbel das umgebende flüssige Medium mit;
- ein erstes Gerät zur Erzeugung einer Bewegung in einem flüssigen Medium mit einem Flügel und einer Hochdruckquelle eines flüssigen Mediums. Der Flügel weist einen aerodynamischen Querschnitt mit gewölbter oberer Flügelfläche auf. Die Hochdruckquelle des flüssigen Mediums ist mit einer Vorrichtung zur Ausbildung von Druckstrahlen aus Düsen verbunden. Die Düsen sind tangential zur oberen gewölbten Flügelfläche ausgerichtet. Das Gerät gemäß der Erfindung ist mit einem Antrieb zur Drehung der Düsen der genannten Vorrichtung versehen. Die Vorrichtung ist in Form eines Rotors ausgebildet, welcher koaxial der Flügellängsachse installiert ist. Der Rotor hat eine Hohlachse mit der Möglichkeit, Wirbel-Druckstrahlen zu bilden;

- ein zweites Verfahren zur Vortriebserzeugung. Das Verfahren besteht darin, dass die Flüssigmedium-Druckstrahlen aus Düsen tangential zur oberen gewölbten Flügelfläche mit einem aerodynamischen Querschnitt gerichtet werden. Nach diesem Verfahren werden die Austrittsstellen der Flüssigmedium-Druckstrahlen gemäß der Erfindung nacheinander gewechselt. Dabei ziehen die Flüssigmedium-Druckstrahlen mittels ihrer Wirbel das umgebende flüssige Medium mit;
- ein zweites Gerät zur Bewegung im flüssigen Medium mit einem Flügel und mit einer Hochdruckquelle des flüssigen Mediums. Der Flügel hat einen aerodynamischen Querschnitt mit einer gewölbten oberen Flügelfläche. Die Hochdruckquelle des flüssigen Mediums ist mit einer Vorrichtung zur Ausbildung von Druckstrahlen aus Düsen verbunden. Die Düsen sind tangential zur oberen gewölbten Flügelfläche ausgerichtet. Die genannte Vorrichtung ist in diesem Gerät gemäß der Erfindung als ein Satz von unbeweglichen Düsen ausgebildet. Die Düsen sind mit einem Verpuffungsstrahltriebwerk verbunden. Sie simulieren eine Kreisbewegung der Düsen mit der Möglichkeit, gewirbelte Druckstrahlen zu bilden;
- ein drittes Verfahren zur Vortriebserzeugung, bei dem die Druckstrahlen eines flüssigen Mediums aus Düsen über eine obere gewölbte Flügelfläche mit einem aerodynamischen Querschnitt gerichtet werden. Bei diesem Verfahren werden die Düsen gemäß der Erfindung in der Ebene der Flügellängsachse hin- und herverschoben, und zwar so, dass die Druckstrahlen des flüssigen Mediums mittels ihrer Wirbel das umgebende flüssige Medium mitziehen;
- ein drittes Gerät zur Bewegung im flüssigen Medium mit einem Flügel und einer Hochdruckquelle des flüssigen Mediums. Der Flügel hat einen aerodynamischen Querschnitt mit einer gewölbten oberen Flügelfläche. Die Hochdruckquelle des flüssigen Mediums ist mit einer Vorrichtung zur Bildung von Druckstrahlen über der oberen gewölbten Flügelfläche verbunden. In diesem Gerät ist die Vorrichtung zur Bildung von Druckstrahlen gemäß der Erfindung in Form von einem in der Ebene der Flügellängsachse angeordneten Satz mit einer Hohlachse und mit Düsen ausgebildet. Die Düsen ermöglichen die Bildung von Druckstrahlen mit Wirbeln. Die Düsen sind mit einer Vorrichtung zur Hin- und Herverschiebung gekoppelt;
- ein alternatives drittes Gerät zur Bewegung im flüssigen Medium mit einem aerodynamischen Flügel mit gewölbter oberer Flügelfläche und mit einer Vorrichtung zur Bildung von Druckstrahlen über der oberen gewölbten Flügelfläche. In diesem Gerät ist die Vorrichtung zur Bildung von Druckstrahlen gemäß der Erfindung in Form von gelenkig befestigten gekrümmten Düsen ausgebildet. Die Düsen sind mit einem Verpuffungsstrahltriebwerk verbunden. Die Ausgestaltung der Düsen ermöglicht die Bildung von Druckstrahlen mit Wirbeln und ihre Rückstellung mittels Federn;
- ein viertes Verfahren zur Vortriebserzeugung, bei dem die Druckstrahlen des flüssigen Mediums aus den Düsen über die obere gewölbte Flügelfläche mit aerodynamischem Querschnitt gerichtet werden. Nach diesem Verfahren wird gemäß der Erfindung die Stelle des Hin- und Heraustritts der Flüssigmedium-Druckstrahlen aus den Düsen in der Ebene der Flügellängsachse simuliert. Dabei ziehen die Flüssigmedium-Druckstrahlen mittels ihrer Wirbel das umgebende flüssige Medium mit;
- ein viertes Gerät zur Bewegung im flüssigen Medium mit einem Flügel mit aerodynamischem Querschnitt mit gewölbter oberer Flügelfläche und mit einer Vorrichtung mit Düsen zur Bildung von Druckstrahlen über der oberen gewölbten Flügelfläche. In diesem Gerät ist die Vorrichtung zur Bildung von Druckstrahlen gemäß der Erfindung in Form eines in der Ebene der Flügellängsachse angeordneten Satzes von unbeweglichen Düsen ausgebildet. Der Düsensatz ist mit einem Verpuffungsstrahltriebwerk verbunden, und zwar so, dass die Austrittsstelle der Flüssigmedium-Druckstrahlen aus den Düsen hin- und hergehend gewechselt werden kann. Dabei ziehen die Flüssigmedium-Druckstrahlen mittels ihrer Wirbel das umgebende flüssige Medium mit;
- ein fünftes Verfahren zur Vortriebserzeugung, bei dem die Druckstrahlen des flüssigen Mediums aus Düsen über die obere gewölbte Flügelfläche mit aerodynamischem Querschnitt gerichtet werden. Nach diesem Verfahren werden die Düsen der Flüssigmedium-Druckstrahlen gemäß der Erfindung in eine schwingende Bewegung (Verlagerung) versetzt. Die schwingende Bewegung erfolgt in der Ebene gleichläufig mit der Längsachse des genannten Flügels und zwar so, dass die Druckstrahlen des flüssigen Mediums mittels ihrer Wirbel das umgebende flüssige Medium mitziehen;
- ein fünftes Gerät zur Bewegung im flüssigen Medium mit einem Flügel und einer Hochdruckquelle des flüssigen Mediums. Der Flügel hat einen aerodynamischen Querschnitt mit einer gewölbten oberen Flügelfläche. Die Hochdruckquelle des flüssigen Mediums ist mit einer Vorrichtung zur Bildung von Druckstrahlen und ihrer Ausrichtung über der oberen gewölbten Flügelfläche verbunden. In diesem Gerät ist die Vorrichtung zur Bildung von Druckstrahlen gemäß der Erfindung als ein Rotor mit einer Hohlachse und mit Düsen ausgebildet. Der Rotor ist senkrecht zur Flügellängsachse aufgebaut. Die Düsen sind symmetrisch an der Stirnfläche aufgebaut. Die Düsen sind schräg zur Stirnfläche angeordnet, so dass die Druckstrahlen das umgebende flüssige Medium mittels Wirbeln mitziehen können.

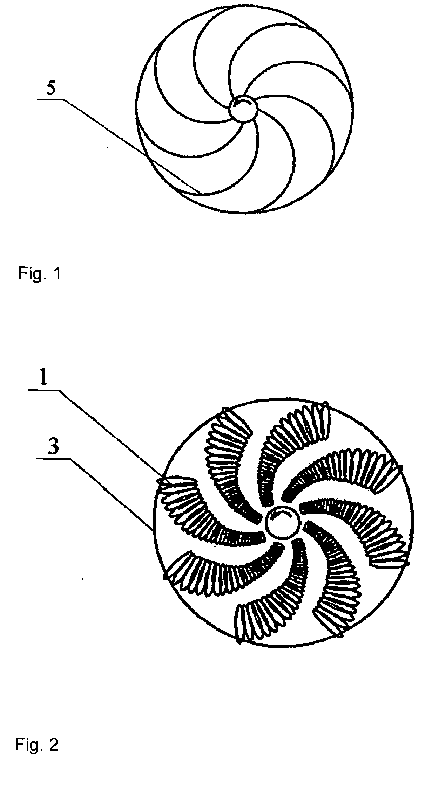

Die Erfindung beruht auf der vom Erfinder V.A. Kovalchuk entdeckten Erscheinung des Druckabbaus im Bewegungsbereich der Strahlen. Die Druckabbauerscheinungen entstehen bei einer Bewegung der Strahlquelle schräg zur Strahlrichtung. Ein solcher Strahlaustritt wurde vom Erfinder als "gestreckter Strahl" bezeichnet (Fig. 1). Der "gestreckte Strahl" entsteht sowohl bei der Bewegung der Strahlquelle als auch bei der folgerichtigen Änderung der Strahlaustrittsstelle, d. h. bei "imaginärer" Bewegung der Quelle.

Die vorgeschlagenen Verfahren zur Vortriebserzeugung ermöglichen es, hinter den Düsen gestreckte spiralenweise gedrehte Strahlen mit einem niedrigen Druck innerhalb der Strahlen zu bilden. Diese Strahlen ziehen bei der Zentrifugalbewegung in Richtung Flügelumfang eine große Menge des umgebenden flüssigen Mediums zur Wirbelung heran (sie ziehen diese umgebende Medium-Menge mit und tragen sie fort). Somit wird der Druck über dem Flügel wesentlich vermindert, ohne dass er sich im Medium bewegt.

Damit wird der Schubwirkungsgrad gesteigert. Dadurch können hohe Bewegungsgeschwindigkeiten erreicht werden.

Beim Austritt der Strahlen und bei gleichzeitiger Drehung des Rotors mit den Düsen, Hin- und Herbewegung oder schwingender Bewegung der Düsen im Bereich "des gestreckten Strahls" wird ein System endloser Wirbelzöpfe erzeugt. Diese bewegen sich von den Düsen zum peripheren Teil des Flügels hin. Die Wirbel haben eine beachtlich höhere Potentialenergie als die Strahlen des flüssigen Mediums. Während der Bewegung ziehen die Wirbelzöpfe große Mengen der umgebenden Luft mit und tragen sie fort. Das führt zum Luftdruckabbau über dem Flügel. Die Druckdifferenz über und unter dem Flügel bedingt eine Bewegung des Geräts.

Der Aufbau des Geräts enthält keine mechanischen Elemente zur Einwirkung auf das Medium. Das vereinfacht die Konstruktion des Geräts und bedingt eine Verminderung seiner Abmessungen und eine Steigerung seiner Zuverlässigkeit. Dies ermöglicht den Start und das Landen sowie die Bewegung in beliebiger Richtung, ohne das Risiko, jegliche Beschädigungen beim Kontakt mit beweglichen Gegenständen zu bekommen.

Die durchgeführten Patentrecherchen haben keine identischen technischen Lösungen ergeben. Somit kann geschlussfolgert werden, dass die angemeldeten technischen Lösungen neu sind und die erforderliche Erfindungshöhe aufweisen.

Die einheimische Industrie verfügt über alle erforderlichen Mittel und Ressourcen (Rohstoffe, Technologie, Ausrüstung), um die vorgeschlagenen Geräte herzustellen und weit und multifunktional anwenden zu können.

Das Wesen der Erfindung wird anhand der Zeichnungen näher erläutert. Es zeigen:
- Fig. 1: ein Bildungsschema der "gestreckten" Strahlen;
- Fig. 2: das Wirbelbildungsbild in Draufsicht;
- Fig. 3: das Wirbelbildungsbild im Längsschnitt;
- Fig. 4: die Gesamtansicht der Vorrichtung zur Wirbelbildung mit einem Rotor und mit radialer Anordnung von Düsen;
- Fig. 5: die Gesamtansicht der Vorrichtung zur Bildung von Wirbelstrah- len mit einem Rotor und schräger Düsenanordnung;
- Fig. 6: die Gesamtansicht des Geräts mit einem Satz unbeweglicher Düsen, die eine kreisläufige Bewegung der Düsen simulieren;
- Fig. 7: die Gesamtansicht der Vorrichtung zur Wirbelbildung mit Hin- und Herbewegung der Düsen;
- Fig. 8: die Gesamtansicht der Vorrichtung zur Wirbelbildung mit einer Simulation der Hin- und Herbewegung der Düsen;
- Fig. 9: die Gesamtansicht der Vorrichtung zur Wirbelbildung mit Hin- und Herbewegung gekrümmter Düsen mit einer Feder;
- Fig. 10: die Gesamtansicht der Vorrichtung zur Wirbelbildung mit schwingender Bewegung der Düsen, die geneigt zur Rotor- stirnfläche ausgerichtet sind;
- Fig. 11: die Gesamtansicht eines Flügels in Form von einem sphärischen Segment;
- Fig. 12: die Gesamtansicht des Flügels in Form von einem sphärischen Segment mit einer Bohrung im mittleren Teil;
- Fig. 13: das Ausrichtungsschema der Druckstrahlen bei der Ausbildung des Flügels in Form von einem sphärischen Segment mit einer Bohrung im mittleren Teil;
- Fig. 14: die Gesamtansicht des Flügels in Form von zwei sphärischen Segmenten;
- Fig. 15: die Gesamtansicht des Geräts mit einem Flügel in Form von ei- ner rechteckigen gekrümmten Platte mit einer Bogenkrümmung über dem Querschnitt und
- Fig. 16: die Gesamtansicht des Geräts mit einem Flügel in Form einer dreieckigen gekrümmten Platte mit einer Bogenkrümmung über dem Querschnitt.

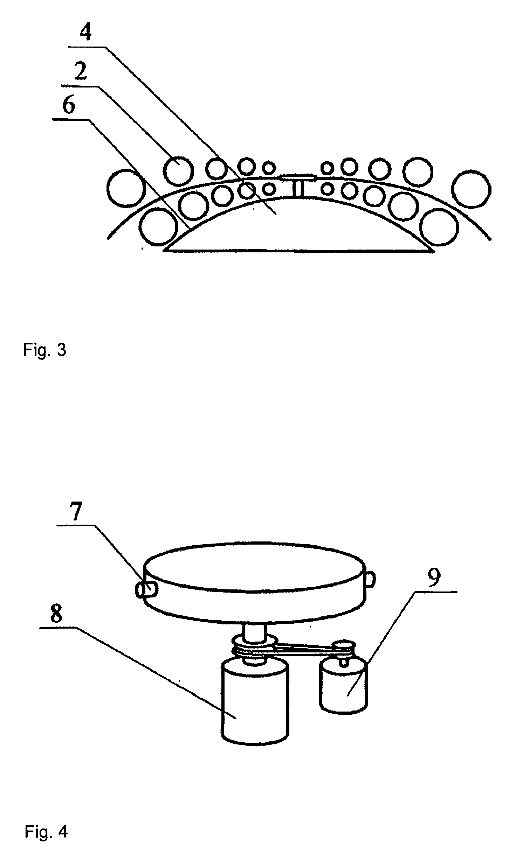

Die vorgeschlagenen Erfindungen benutzen die einzigartige Eigenschaft von einem Gaswirbel 1, bei seiner Bewegung eine sehr große Menge 2 des umgebenden flüssigen Mediums (Fig. 2 und 3) mit einzuziehen (einzufangen). Dies ist dadurch bedingt, dass es im Kern des Gaswirbels 1 einen Leerraum gibt. Während der Bewegung der Gaswirbel 1 vom Mittelpunkt zum Rand 3 des Flügels 4 werden große Luftmengen 2 mitgezogen und fort getragen. Das führt zu einer Druckabnahme über dem Flügel 4. Der Effekt einer Schubbildung gilt sowohl bei der Bewegung der Quelle des Druckstrahls 5 in einer Richtung (kreisförmig) als auch bei einer Hin- und Herbewegung in der Ebene der Längsachse des Flügels 4 sowie bei einer schwingenden Bewegung in der Ebene, die zu der Längsachse des Flügels 4 parallel verläuft.

Das erste Verfahren zur Vortriebserzeugung nach Anspruch 1 besteht darin, dass flüssiges Medium (Fluid) aus den Düsen als Druckstrahlen 5 tangential zur oberen gewölbten Fläche 6 des Flügels 4 mit einem aerodynamischen Querschnitt ausgerichtet wird. Dabei verlagern Düsen 7 das flüssige Medium (Fluid) schräg zur Richtung der Druckstrahlen 5. Die Druckstrahlen 5 ziehen mit ihren Wirbeln 1 das umgebende flüssige Medium mit.

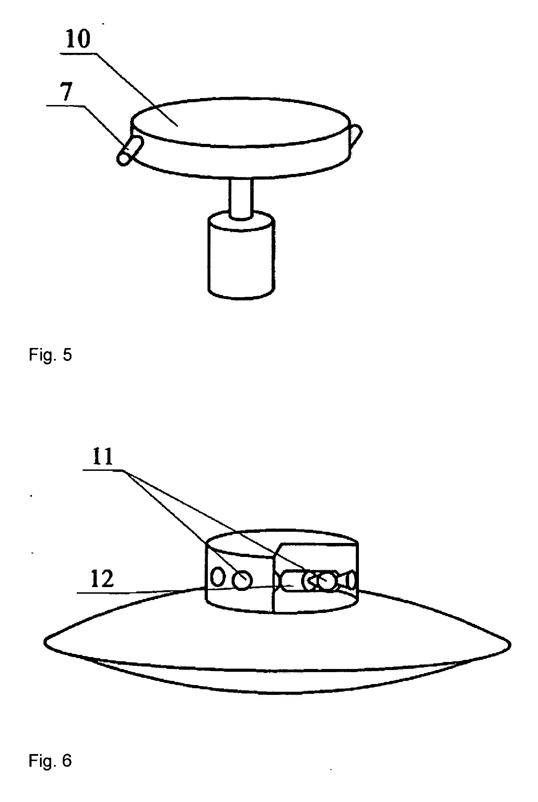

Das erste Gerät nach Anspruch 2 zur Bewegung im flüssigen Medium nach dem oben vorgeschlagenen Verfahren enthält einen Flügel 4 mit einem aerodynamischen Querschnitt mit einer gewölbten oberen Flügelfläche 6 und eine Hochdruckquelle 8 des flüssigen Mediums. Das flüssige Medium ist mit einer Vorrichtung zur Bildung von Druckstrahlen 5 aus Düsen 7 verbunden. Die Druckstrahlen 5 sind tangential zur oberen gewölbten Fläche 6 des Flügels 4 ausgerichtet. Das Gerät ist mit einem Drehantrieb für die Düsen 7 ausgerüstet. Diese Vorrichtung ist in Form eines Rotors 9 mit einem Antrieb 10 und einer Hohlachse (in der Zeichnung nicht dargestellt) ausgebildet. Der Rotor 9 ist koaxial zur Flügellängsachse installiert. Dadurch können die Druckstrahlen 5 mit den Wirbeln 1 (Fig. 4 und Fig. 5) gebildet werden.

Die Hochdruckquelle 8 für das flüssige Medium (Fluid) ist in Form eines Verdichters (Radialverdichter oder Axialverdichter) ausgeführt.

Das zweite Verfahren zur Vortriebserzeugung nach Anspruch 3 besteht darin, dass das flüssige Medium (Fluid) aus den Düsen 7 der Druckstrahlen 5 tangential zur oberen gewölbten Fläche 6 des Flügels 4 mit einem aerodynamischen Querschnitt ausgerichtet wird. Dabei werden die Austrittsstellen der Druckstrahlen 5 des flüssigen Mediums nacheinander gewechselt. Die Druckstrahlen 5 ziehen mit ihren Wirbeln 1 das umgebende flüssige Medium mit.

Das zweite Gerät nach Anspruch 4 zur Bewegung im flüssigen Medium nach dem in Anspruch 3 vorgeschlagenen Verfahren enthält Flügel 4 mit einem aerodynamischen Querschnitt mit einer gewölbten oberen Flügelfläche 6 und eine Hochdruckquelle 8 des flüssigen Mediums. Die Hochdruckquelle 8 des flüssigen Mediums ist mit einer Vorrichtung zur Bildung von Druckstrahlen 5 aus den Düsen 11 verbunden. Die Druckstrahlen 5 sind tangential zur oberen gewölbten Fläche 6 des Flügels 4 ausgerichtet. Die oben genannte Vorrichtung zur Bildung von Druckstrahlen 5 ist als ein Satz von unbeweglichen Düsen 11 ausgebildet. Die Düsen 11 sind mit einem Verpuffungsstrahltriebwerk 12 verbunden. Die Düsen 11 simulieren eine kreisförmige Bewegung der Düsen 11 mit der Möglichkeit, die Druckstrahlen 5 als Wirbel 1 zu bilden (Fig. 6).

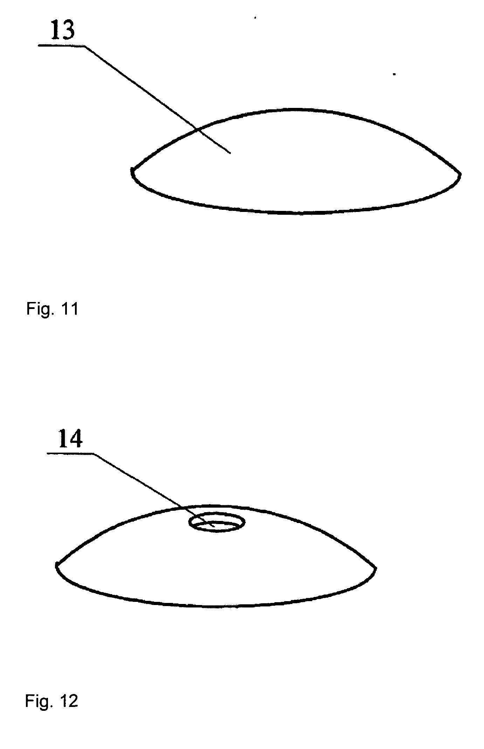

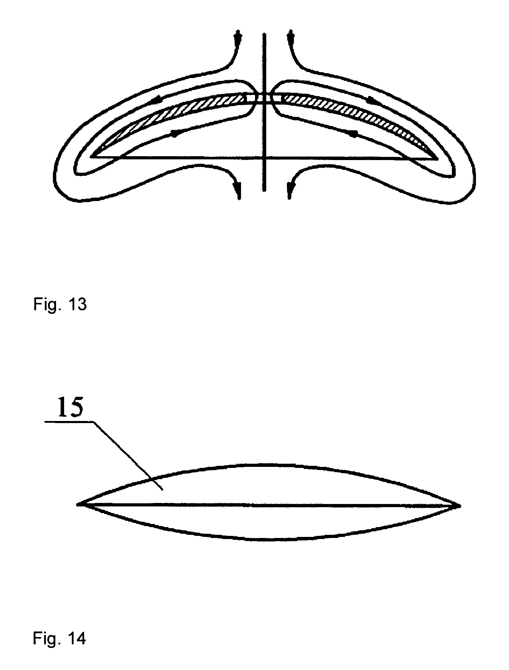

Die Flügel 4 mit aerodynamischem Querschnitt in den Geräten nach Anspruch 2 und 4 können als eine Scheibe (Teller) ausgebildet werden: in Form von einem sphärischen Segment 13 (Fig. 11), von einem sphärischen Segment 13 mit einer Bohrung 14 im Mittelteil (Fig. 12 und Fig. 13) oder in Form von zwei sphärischen Segmenten 15 (Fig. 14).

Das dritte Verfahren zur Vortriebserzeugung nach Anspruch 5 besteht darin, dass das flüssige Medium aus den Düsen 7 der Druckstrahlen 5 über die obere konvexe Oberfläche 6 des Flügels 4 mit einem aerodynamischen Querschnitt ausgerichtet wird. Dabei werden die Düsen 7 hin- und hergehend in der Ebene der Längsachse der Flügel 4 so verlagert, dass die Druckstrahlen 5 des flüssigen Mediums mit ihren Wirbeln 1 das umgebende flüssige Medium mitziehen.

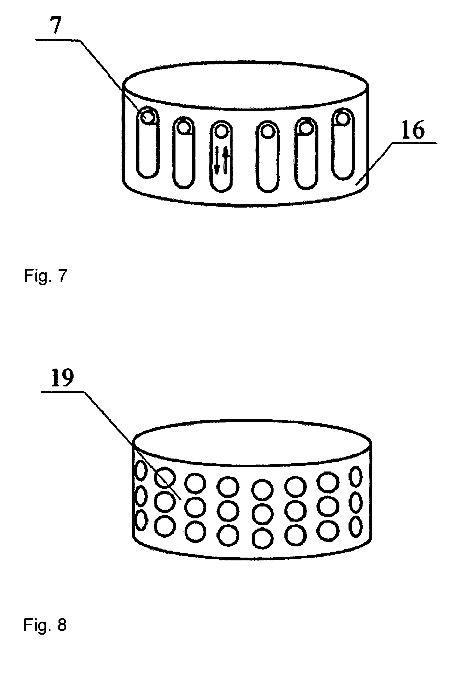

Das dritte Gerät nach Anspruch 6 zur Bewegung im flüssigen Medium gemäß dem in Anspruch 5 vorgeschlagenen Verfahren enthält Flügel 4 mit einem aerodynamischen Querschnitt mit einer gewölbten oberen Flügelfläche 6 und eine Hochdruckquelle 8 des flüssigen Mediums. Die Hochdruckquelle 8 des flüssigen Mediums ist mit einer Vorrichtung zur Bildung von Druckstrahlen 5 über der oberen gewölbten Flügelfläche 6 verbunden. Dabei ist die genannte Vorrichtung zur Bildung von Druckstrahlen 5 in Form einer Baugruppe 16 mit einer Hohlachse (in der Zeichnung nicht dargestellt) und Düsen 7 ausgebildet. Die Baugruppe 16 ist in der Ebene der Längsachse des Flügels 4 angeordnet. Die Ausführung der Düsen 7 ermöglicht es, Druckstrahlen 5 mit Wirbeln 1 zu bilden. Die Düsen 7 sind mit einer Vorrichtung zur Hin- und Herverschiebung gekoppelt (in der Zeichnung nicht dargestellt) (Fig. 7).

Die Hochdruckquelle 8 des flüssigen Mediums ist in Form eines Verdichters (Radialverdichter oder Axialverdichter) ausgeführt.

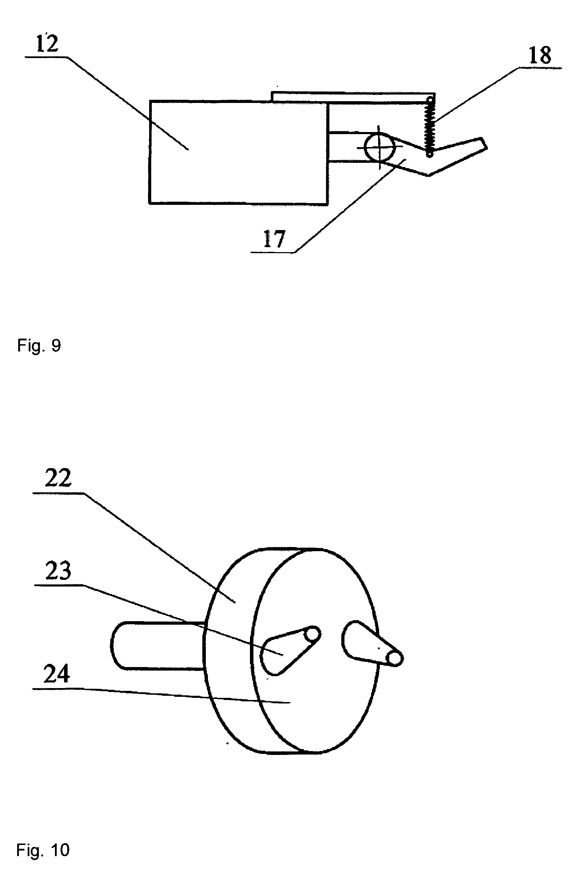

Ein alternatives drittes Gerät nach Anspruch 7 zur Bewegung im flüssigen Medium gemäß dem in Anspruch 5 vorgeschlagenen Verfahren enthält Flügel 4 mit einem aerodynamischen Querschnitt mit einer gewölbten oberen Flügelfläche 6 und eine Vorrichtung mit Düsen 17 zur Bildung von Druckstrahlen über der oberen konvexen Oberfläche 6 des Flügels 4. Dabei ist die genannte Vorrichtung zur Bildung von Druckstrahlen 5 in Form von gelenkig befestigten gekrümmten Düsen 17 ausgebildet. Die Düsen 17 sind mit einem Verpuffungsstrahltriebwerk 12 verbunden. Die Ausgestaltung der Düsen 17 ermöglicht die Bildung von Druckstrahlen 5 mit Wirbeln 1 und ihre Rückstellung mittels Federn 18 (Fig. 9).

Das vierte Verfahren zur Vortriebserzeugung nach Anspruch 8 besteht in der Ausrichtung der Druckstrahlen 5 des flüssigen Mediums aus den Düsen 7 über die obere konvexe Oberfläche 6 des Flügels 4 mit einem aerodynamischen Querschnitt. Dabei wird die Stelle des hin- und hergehenden Austritts der Druckstrahlen 5 des flüssigen Mediums aus den Düsen 7 in der Ebene der Flügellängsachse simuliert. Die Druckstrahlen 5 ziehen mit ihren Wirbeln 1 das umgebende flüssige Medium mit.

Das vierte Gerät nach Anspruch 9 zur Bewegung im flüssigen Medium gemäß dem in Anspruch 8 vorgeschlagenen Verfahren enthält Flügel 4 mit einem aerodynamischen Querschnitt mit einer gewölbten oberen Flügelfläche 6 und eine Vorrichtung zur Bildung von Druckstrahlen 5 über die obere konvexe Oberfläche 6 des Flügels 4. Dabei ist die genannte Vorrichtung zur Bildung von Druckstrahlen 5 in Form von einem Satz unbeweglicher Düsen 19 ausgebildet, die in der Ebene der Längsachse der Flügel 4 angeordnet sind. Der Satz der Düsen 19 ist mit einem Verpuffungsstrahltriebwerk 12 so gekoppelt, dass die Austrittsstelle der Druckstrahlen 5 des flüssigen Mediums aus den Düsen 17 hin- und hergehend gewechselt werden kann. Die Druckstrahlen 5 ziehen mittels ihrer Wirbel 1 das umgebende flüssige Medium mit (Fig. 8).

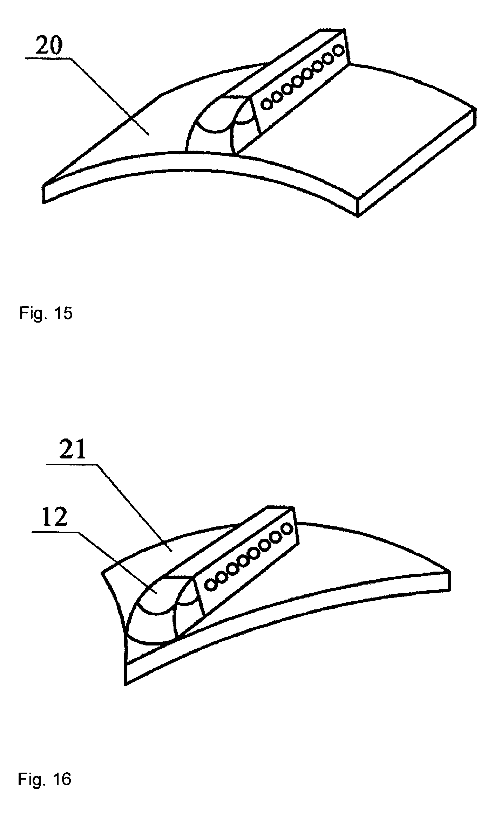

Der Flügel 4 mit einem aerodynamischen Querschnitt kann in den Geräten nach Anspruch 9 folgenderweise ausgeführt werden:
- in Form einer rechteckigen gekrümmten Platte 20 mit einem bogenartigen Querschnitt (Fig. 15) oder
- in Form einer dreieckigen Platte 21 mit einer Bogenkrümmung über dem Querschnitt (Fig. 16).
- Außerdem kann der Flügel 4 in Form von einem sphärischen Segment 13 (Fig. 11), von einem sphärischen Segment mit einer Bohrung im mittleren Teil 14 (Fig. 12 und 13) oder in Form von zwei sphärischen Segmenten 15 (Fig. 14) ausgebildet werden.

Das fünfte Verfahren zur Vortriebserzeugung nach Anspruch 10 besteht in der Ausrichtung der Druckstrahlen 5 des flüssigen Mediums aus Düsen 23 über die obere konvexe Oberfläche 6 des Flügels 4 mit einem aerodynamischen Querschnitt. Dabei werden die Düsen 23 der Druckstrahlen 5 des flüssigen Mediums in eine schwingende Bewegung versetzt. Die schwingende Bewegung erfolgt in der Ebene, die parallel der Längsachse des genannten Flügels 4 liegt, so dass Druckstrahlen 5 des flüssigen Mediums (des Fluids) mittels ihrer Wirbel 1 das umgebende flüssige Medium mitziehen.

Das fünfte Gerät nach Anspruch 11 zur Bewegung im flüssigen Medium gemäß dem in Anspruch 10 vorgeschlagenen Verfahren enthält Flügel 4 mit einem aerodynamischen Querschnitt mit einer gewölbten oberen Flügelfläche 6 und eine Hochdruckquelle 8 des flüssigen Mediums. Die Hochdruckquelle 8 des flüssigen Mediums ist mit einer Vorrichtung zur Bildung von Druckstrahlen 5 verbunden. Das Gerät dient auch zur Ausrichtung der Druckstrahlen 5 über die obere konvexe Oberfläche 6 des Flügels 4. Dabei ist die genannte Vorrichtung zur Bildung von Druckstrahlen 5 in Form eines Rotors 22 ausgebildet. Der Rotor 22 ist senkrecht zur Längsachse des Flügels 4 angeordnet und mit einer Hohlachse (in der Zeichnung nicht dargestellt) und mit Düsen 23 ausgerüstet. Die Düsen 23 sind symmetrisch an der Stirnfläche 24 und schräg zur Stirnfläche 24 angebaut, so dass die Wirbel 1 der Druckstrahlen 5 das umgebende flüssige Medium (Fig. 10) mitziehen.

Die Hochdruckquelle 8 des flüssigen Mediums ist in Form von einem Verdichter (Radialverdichter oder Axialverdichter) ausgeführt. Der Flügel 4 kann dabei eine beliebige oben erwähnte Form aufweisen.

Die Geräte zur Bewegung im flüssigen Medium funktionieren auf folgende Weise:

Das erste Gerät nach Anspruch 2 (Fig. 4). Die Hochdruckquelle 8 und der Rotor 10 mit den Düsen 7 schalten sich ein. Die Druckstrahlen 5 des flüssigen Mediums (Luft oder Wasser) gelangen in die Düsen 7 des Geräts. Als Ergebnis werden hinter den beweglichen Düsen 7 Druckstrahlen 5 mit Wirbeln 1 gebildet.

Das dritte Gerät nach Anspruch 6 (Fig. 7). Die Hochdruckquelle 8 und die Vorrichtung zur hin- und hergehenden Bewegung der Düsen 7 (in der Zeichnung nicht dargestellt) schalten sich ein. Die Druckstrahlen 5 des flüssigen Mediums (Luft oder Wasser) gelangen in die Düsen 7 des Geräts. Als Ergebnis werden hinter den beweglichen Düsen 7 Druckstrahlen 5 mit Wirbeln 1 gebildet.

Das fünfte Gerät nach Anspruch 11 (Fig. 10). Die Hochdruckquelle 8 schaltet sich ein. Die Hochdruckquelle 8 ist mit schrägen Düsen 23 gegenseitig verbunden, die symmetrisch an der Stirnfläche 24 des Rotors montiert sind. Beim Austritt aus den Düsen 23 treiben die Druckstrahlen 5 den Rotor 22 an. Dabei führen die Düsen 23 schwingende Bewegungen in Bezug auf den Flügel 4 aus. Als Ergebnis werden hinter den beweglichen Düsen 23 Druckstrahlen 5 mit Wirbeln 1 gebildet.

Während der simulierten kreisförmigen Bewegung der Düsen 11 funktioniert das zweite Gerät nach Anspruch 4 (Fig. 6) auf folgende Weise:

Das Verpuffungsstrahltriebwerk 12 und die unter Druck gebildeten Strahlen werden in der vorgegebenen Reihenfolge an den Satz 16 der unbeweglichen Düsen 11 gerichtet. Die Düsen 11 sind an der Zylinderoberfläche des Düsensatzes 16 angeordnet. Als Ergebnis werden Druckstrahlen 5 mit Wirbeln 1 hinter den beweglichen Düsen 11 gebildet, die die kreisförmige Bewegung der Düsen 11 simulieren.

Während der simulierenden Hin- und Herbewegung der Düsen funktionieren die Geräte nach Anspruch 9 (Fig. 8, Fig. 15 und Fig. 16) auf folgende Weise:

Das Verpuffungsstrahltriebwerk 12 schaltet sich ein. Druckstrahlen 5 werden unter Druck an den Düsensatz 19 (Fig. 8) oder die Düsensätze (Fig. 16) der unbeweglichen Düsen 11 gerichtet. Die Düsen 11 sind in einer Linie (linear) angeordnet. Hier wird die Austrittsstelle der Druckstrahlen 5 aus den Düsen 11 in vorgegebener Reihenfolge gewechselt. Als Ergebnis werden Druckstrahlen 5 mit Wirbeln 1 gebildet.

Das vierte Gerät nach Anspruch 7 (Fig. 9) funktioniert in folgender Weise:

Das mit gekrümmten Düsen 17 gekoppelte Verpuffungsstrahltriebwerk 12 schaltet sich ein. Die Düsen 17 sind rückstellbar mittels Federn 18 ausgebildet. Als Ergebnis führen die Düsen 17 Hin- und Herbewegungen aus, wodurch Druckstrahlen 5 mit Wirbeln 1 gebildet werden.

Während der Bewegung der Wirbel 1 vom Mittelpunkt zum Rand 3 des Flügels 4 werden große Luftmengen 2 mitgezogen und fortgerissen. Das führt zum Druckabbau über dem Flügel 4. Das Gerät (nach einer beliebigen der angemeldeten Ausführungsformen) steigt auf und bewegt sich in gewünschter Richtung.

Der Erfinder hat Labormodelle der Geräte mit unterschiedlichen Flügelformen geprüft. Sie weisen die Funktionsfähigkeit der Geräte bei der Schuberzeugung und Bewegung in beliebiger Richtung nach. Bei Bedarf können Bilder und Videos zur Verfügung gestellt werden.

## Patentansprüche

1. Verfahren zur Vortriebserzeugung, bei dem Flüssigmedium-Druckstrahlen (5) aus Düsen (7) tangential zur oberen gewölbten Flügelfläche (6) von Flügeln (4) mit einem aerodynamischen Querschnitt gerichtet werden,
**dadurch gekennzeichnet,**
**dass** die Düsen (7) schräg zur Richtung der Flüssigmedium-Druckstrahlen (5) bewegt werden, wobei die Flüssigmedium-Druckstrahlen (5) mittels ihrer Wirbel (1) das umgebende flüssige Medium mitziehen.

2. Gerät zur Bewegung im flüssigen Medium mit einem Flügel (4) und einer Hochdruckquelle (8) des flüssigen Mediums, wobei der Flügel (4) einen aerodynamischen Querschnitt mit einer gewölbten oberen Flügelfläche (6) aufweist, wobei die Hochdruckquelle (8) des flüssigen Mediums mit einer Vorrichtung zur Ausbildung von Druckstrahlen (5) aus Düsen (7) verbunden ist und wobei die Düsen (7) tangential zur oberen gewölbten Flügelfläche (6) ausgerichtet sind,
**dadurch gekennzeichnet,**
**dass** das Gerät mit einem Antrieb (10) zur Drehung der Düsen (7) der genannten Vorrichtung versehen ist,
**dass** die Vorrichtung in Form eines Rotors (9) ausgebildet ist, welcher koaxial zur Längsachse der Flügel (4) installiert ist und
**dass** der Rotor (9) eine Hohlachse aufweist mit der Möglichkeit, Druckstrahlen (5) mit Wirbeln (1) zu bilden.

3. Verfahren zur Vortriebserzeugung, bei dem die Flüssigmedium-Druckstrahlen (5) aus Düsen (7) tangential zur oberen gewölbten Flügelfläche (6) mit einem aerodynamischen Querschnitt der Flügel (4) gerichtet werden,
**dadurch gekennzeichnet,**
**dass** die Austrittsstellen der Flüssigmedium-Druckstrahlen (5) nacheinander gewechselt werden und
**dass** die Flüssigmedium-Druckstrahlen (5) dabei mittels ihrer Wirbel (1) das umgebende flüssige Medium mitziehen.

4. Gerät zur Bewegung im flüssigen Medium mit einem Flügel (4) und einer Hochdruckquelle (8) des flüssigen Mediums, wobei der Flügel (4) einen aerodynamischen Querschnitt mit einer gewölbten oberen Flügelfläche (6) aufweist, die Hochdruckquelle (8) des flüssigen Mediums mit einer Vorrichtung zur Ausbildung von Druckstrahlen aus den Düsen (7) verbunden und die Düsen (7) tangential zur oberen gewölbten Flügelfläche (6) ausgerichtet sind,
**dadurch gekennzeichnet,**
**dass** die genannte Vorrichtung als ein Satz (16) von unbeweglichen Düsen (11) ausgebildet ist,
**dass** die unbeweglichen Düsen (11) mit einem Verpuffungsstrahltriebwerk (12) verbunden sind und eine Kreisbewegung der Düsen (11) simulieren mit der Möglichkeit, Druckstrahlen (5) mit Wirbeln (1) zu bilden.

5. Verfahren zur Vortriebserzeugung, bei dem die Druckstrahlen (5) des flüssigen Mediums aus Düsen (7) über die obere gewölbte Flügelfläche (6) eines Flügels (4) mit einem aerodynamischen Querschnitt gerichtet werden,
**dadurch gekennzeichnet,**
**dass** die Düsen (7) in der Ebene der Flügellängsachse hin- und herverschoben werden und zwar so, dass die Druckstrahlen (5) des flüssigen Mediums mittels ihrer Wirbel (1) das umgebende flüssige Medium mitziehen.

6. Gerät zur Bewegung im flüssigen Medium mit einem Flügel (4) und einer Hochdruckquelle (8) des flüssigen Mediums, wobei der Flügel (4) einen aerodynamischen Querschnitt mit einer gewölbten oberen Flügelfläche (6) hat und die Hochdruckquelle (8) des flüssigen Mediums mit einer Vorrichtung zur Bildung von Druckstrahlen (5) über der oberen gewölbten Flügelfläche (6) verbunden ist, **dadurch gekennzeichnet,**
**dass** die Vorrichtung zur Bildung von Druckstrahlen (5) in Form einer in der Ebene der Längsachse des Flügels (4) angeordneten Baugruppe (16) mit Hohlachse und mit Düsen (7) ausgebildet ist,
**dass** die Düsen (7) die Bildung der Druckstrahlen (5) mit Wirbeln (1) ermöglichen und mit einer Vorrichtung zur Hin- und Herverschiebung gekoppelt sind.

7. Gerät zur Bewegung im flüssigen Medium mit einem aerodynamischen Flügel (4) mit einer gewölbten oberen Flügelfläche (6) und mit einer Vorrichtung mit Düsen (17) zur Bildung von Druckstrahlen (5) über der oberen gewölbten Flügelfläche (6) des Flügels (4),
**dadurch gekennzeichnet,**
**dass** die Vorrichtung zur Bildung der Druckstrahlen (5) in Form von gelenkig befestigten gekrümmten Düsen (17) ausgebildet ist;
**dass** die Düsen (17) mit einem Verpuffungsstrahltriebwerk (12) verbunden sind und
**dass** die Ausgestaltung der Düsen (17) die Bildung von Druckstrahlen (5) mit Wirbeln (1) und die Rückstellung mittels Federn ermöglicht.

8. Verfahren zur Vortriebserzeugung, bei dem die Druckstrahlen (5) des flüssigen Mediums aus Düsen (7) über die obere gewölbte Flügelfläche (6) mit einem aerodynamischen Querschnitt gerichtet werden,
**dadurch gekennzeichnet,**
**dass** die Stelle des hin- und hergehenden Austritts der Druckstrahlen (5) des flüssigen Mediums aus den Düsen (7) in der Ebene der Längsachse des Flügels (4) simuliert wird und
**dass** dabei die Flüssigmedium-Druckstrahlen (5) mittels ihrer Wirbel (1) das umgebende flüssige Medium mitziehen.

9. Gerät zur Bewegung im flüssigen Medium mit einem Flügel (4) mit einem aerodynamischen Querschnitt mit gewölbter oberer Flügelfläche (6) sowie mit einer Vorrichtung zur Bildung von Druckstrahlen (5) über der oberen gewölbten Flügelfläche (6) des Flügels (4),
**dadurch gekennzeichnet,**
**dass** die Vorrichtung zur Bildung von Druckstrahlen (5) in Form von einem in der Ebene der Längsachse des Flügels (4) angeordneten Satz unbeweglicher Düsen (19) ausgebildet ist;
**dass** der Düsensatz (19) mit einem Verpuffungsstrahltriebwerk (12) verbunden ist, und zwar so, dass die Austrittsstelle der Druckstrahlen (5) des flüssigen Mediums aus den Düsen (19) hin- und hergehend gewechselt wird und
**dass** dabei die Flüssigmedium-Druckstrahlen (5) mittels ihrer Wirbel (1) das umgebende flüssige Medium mitziehen.

10. Verfahren zur Vortriebserzeugung, bei dem die Druckstrahlen (5) des flüssigen Mediums aus Düsen (7) über die obere gewölbte Flügelfläche (6) eines Flügels (4) mit einem aerodynamischen Querschnitt gerichtet werden,
**dadurch gekennzeichnet,**
**dass** die Düsen (7) der Flüssigmedium-Druckstrahlen (5) in schwingende Bewegung (Verlagerung) versetzt werden,
**dass** die schwingende Bewegung in der Ebene gleichläufig mit der Längsachse des genannten Flügels (4) verläuft, und zwar so, dass die Druckstrahlen (5) des flüssigen Mediums mittels ihrer Wirbel (1) das umgebende flüssige Medium mitziehen.

11. Gerät zur Bewegung im flüssigen Medium mit einem Flügel (4) und einer Hochdruckquelle (8) des flüssigen Mediums, wobei der Flügel (4) einen aerodynamischen Querschnitt mit gewölbter oberer Flügelfläche (6) hat und wobei die Hochdruckquelle (8) des flüssigen Mediums mit einer Vorrichtung versehen ist, um die Druckstrahlen (5) zu bilden und sie über die obere gewölbte Flügelfläche (6) zu richten,
**dadurch gekennzeichnet,**
**dass** die Vorrichtung zur Bildung von Druckstrahlen (5) als ein Rotor (22) mit Hohlachse und mit Düsen (23) ausgebildet ist,
**dass** der Rotor (22) senkrecht zur Längsachse des Flügels (4) aufgebaut ist,
**dass** die Düsen (23) symmetrisch an der Stirnfläche (24) aufgebaut sind und
**dass** die Düsen (23) schräg zur Stirnfläche (24) angeordnet sind, so dass die Druckstrahlen (5) das umgebende flüssige Medium mittels Wirbeln (1) mitziehen.
